# EUROPÄISCHE PATENTANMELDUNG

(11) **EP 3 305 501 A1**
(43) Veröffentlichungstag der Anmeldung: **11.04.2018**
(21) Anmeldenummer: 17001206.6
(22) Anmeldetag: 14.07.2017
(51) Int. Cl.: B29C 47/38, B29C 47/60, B29C 47/08

(54) **SCHNECKE ZUM EINSATZ IN EINEM EXTRUDER UND EXTRUDER**

(30) Priorität: 10.10.2016 DE 102016011978
(71) Anmelder: Reifenhäuser GmbH & Co. KG Maschinenfabrik, 53844 Troisdorf (DE)
(72) Erfinder: Meyer, Helmut, DE - 53842 Troisdorf (DE)
(74) Vertreter: Farago-Schauer, Peter Andreas

(57) **Zusammenfassung**

Die Erfindung betrifft eine Schnecke zum Einsatz in einem Extruder sowie einen Extruder mit einer solchen Schnecke, insbesondere eine Schnecke zum Einsatz in einem Mehrschneckenextruder sowie einen Mehrschneckenextruder.

Schnecken werden im Stand der Technik oft aus Segmenten aufgebaut, die auf einem Dorn getragen und axial miteinander verspannt werden. Um im Einsatz der Schnecke innerhalb des Extruderzylinders das Drehmoment auf die Segmente übertragen zu können, finden sich formschlüssige Verbindungen zwischen dem Dorn und den Segmenten.

Die hier vorliegende Erfindung schlägt stattdessen vor, ein zusätzliches Verbindungselement direkt von Segment zu Segment einzusetzen, um den Dorn zu entlasten.

## Beschreibung

Die Erfindung betrifft eine Schnecke zum Einsatz in einem Extruder sowie einen Extruder mit einer solchen Schnecke, insbesondere eine Schnecke zum Einsatz in einem Mehrschneckenextruder sowie einen Mehrschneckenextruder, wobei die Schnecke einen Dorn und eine Mehrzahl auf dem Dorn getragene, axial zueinander angeordnete Segmente aufweist.

Üblicherweise werden Schnecken modular aufgebaut. Sie können dadurch sehr flexibel an veränderte Aufgabenstellungen und Produkteigenschaften angepasst werden. Die modulare Bauweise einer Schnecke führt zu einem stabförmigen Kern, dem sogenannten Dorn, in der Praxis auch oft Welle oder Tragwelle genannt, und aus einzelnen Schneckenelementen, die auf den Dorn aufgeschoben werden. Die Elemente erfüllen die klassischen Funktionen der Schnecke im Extrusionsprozess wie beispielsweise das Fördern, Kneten, Mischen oder Scheren des ein- und durchzuführenden Kunststoffs.

Zum Übertragen des hohen auftretenden Drehmoments werden die Elemente mit dem Dorn formschlüssig verbunden und zusätzlich axial verspannt.

Die DE 10 2008 028 289 A1 offenbart eine Schnecke, bei welcher das Drehmoment von Segment zu Segment stirnseitig über eine Verzahnung übergeben wird.

Die DE 103 30 530 A1 beschreibt eine Welle, auf welcher eine Hülse aufgeschweißt wird. Segmente werden bis zum Anschlag aufgefädelt.

Die DE 10 2011 112 148 A1, die DE 10 2004 042 746 B4 und die DE 196 21 571 C2 offenbaren jeweils spezielle Verzahnungen zwischen den Schneckensegmenten und dem Dorn.

Die DE 37 14 506 A1 beschreibt eine formschlüssige stirnseitige Kupplung zweier Wellensegmente mit kreisrunden Bolzen zum Verbinden der Wellen.

Die DE 43 19 058 A1 beschreibt eine glatte, einen kreisquerschnitt aufweisende Welle als Träger für die Schneckensegmente, welche ihrerseits stirnseitig formschlüssig aneinandergehalten werden, wobei keine Verbindungselemente eingesetzt werden, sondern die Segmente axial gegeneinander verspannt werden.

Die EP 0 688 600 A1 beschreibt eine stirnseitige Kupplung zweier Wellensegmente mit kreisrunden Bolzen als Verbindungselemente. Weiter wird eine segmentierte Schnecke beschrieben, bei der die Segmente auf einen Dorn geschoben werden und die Segmente an einer Stirnseite einen Vorsprung aufweisen, welcher in eine passende Vertiefung auf der korrespondierenden anderen Stirnseite des benachbarten Segmentes passt.

Die DE 44 44 370 A1 beschreibt eine segmentierte Schnecke, die über separate Hülsen mit einem ringförmigen Querschnitt an den Stirnseiten der Segmente gekuppelt werden.

Die JP 2009078361 A offenbart eine segmentierte Schnecke, bei der die Segmente auf einen Dorn geschoben werden und die Segmente an einer Stirnseite einen Vorsprung aufweisen, welcher in eine passende Vertiefung auf der korrespondierenden anderen Stirnseite des benachbarten Segmentes passt. Die Segmente werden also über stirnseitige Mitnehmer eingekuppelt.

Die US 2012/0135098 A1 offenbart eine segmentierte Schnecke, bei der die Segmente auf einen Dorn geschoben und die Segmente an einer Stirnseite über eine spezielle Passfeder gekuppelt werden, deren Längsachse so gekrümmt ist, das sie auf dem entsprechenden Kupplungsteilkreis verläuft.

Der Erfindung liegt die Aufgabe zugrunde, dem Stand der Technik eine Verbesserung oder eine Alternative zur Verfügung zu stellen.

Nach einem ersten Aspekt der Erfindung löst die Aufgabe eine Schnecke zum Einsatz in einem Extruder, wobei die Schnecke einen Dorn und eine Mehrzahl auf dem Dorn getragene, axial zueinander angeordnete Segmente aufweist, wobei eine Segmentgrenze zwischen einem ersten Segment und einem axial benachbarten zweiten Segment einen separates insbesondere zylindrisches Verbindungselement aufweist, welches dazu eingerichtet ist ein Drehmoment über die Segmentgrenze zu übertragen, wobei eine Länge des Verbindungselementes zum Durchmesser des Verbindungselementes größer ist als 11.

### Begrifflich sei hierzu Folgendes erläutert:

Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei ..." usw., sofern sich nicht aus dem jeweiligen Kontext ausdrücklich ergibt oder es für den Fachmann offensichtlich oder technisch zwingend ist, dass dort nur "genau ein ...", "genau zwei ..." usw. gemeint sein können.

Der "Dorn" sei in axialer Erstreckung verstanden jedenfalls vom Ende des ersten Segments bis zum Beginn des letzten Segments. Das Eintragen des Moments in die Schnecke ist sowohl über den Dorn möglich - dann ist eine tangentiale Fixierung zwischen dem Getriebeabtrieb und dem Dorn erforderlich, als auch über eine momentenübertragende Verbindung des Getriebeabtriebs mit mindestens einem Segment, bevorzugt mit dem axial ersten Segment.

Die "Segmente" sind diejenigen Bauelemente der Schnecke, welche zusammen den schneckenförmigen Gang bzw. die Mehrzahl an schneckenförmigen Gängen zum Plastifizieren des durch den Extruder zu führenden Kunststoffs in Zusammenwirkung mit dem Gehäuse/Zylinder des Extruders bewirken und/oder ein Knetelement und/oder ein Förderelement bilden.

Jeweils zwei axial benachbarte Segmente stoßen unmittelbar - im Falle von direkt benachbarten Segmenten - oder mittelbar - bei einem oder mehreren dazwischen liegenden Segmenten - an ihren Segmentengrenzen axial aneinander. Der sich dazwischen einstellende Schlitz, im einfachsten Fall also ein Kreisring, muss gegen den Durchtritt von Kunststoffschmelze nach innen, somit zum Dorn hin, abgedichtet werden. Die Segmente werden dazu üblicherweise axial verspannt. Die Normalkraft führt zu einer ausreichenden Abdichtung mittels Flächenpressung.

Unter einem "Verbindungselement" wird eine Verbindung zwischen den Segmenten verstanden. Insbesondere ist das Verbindungselement dazu geeignet, ein Segment in seiner radialen und/oder tangentialen Bewegungsfreiheit einzuschränken. Sofern von einem eckigen Verbindungselement die Rede ist, so bezieht sich dies auf den Querschnitt des Verbindungselementes, der normal zur Achse des Extruders orientiert ist.

Das "Verbindungselement" muss sowohl mit dem ersten Segment als auch mit dem zweiten Segment zusammenwirken. Bei Beaufschlagung der Schnecke mit einem Drehmoment, konkret an einem Segment, überträgt das erste Segment das Moment zumindest im überwiegenden Anteil auf das Verbindungselement. Das Verbindungselement gibt das Drehmoment mit Bezug auf die Achse des Extruders sodann an das - insbesondere axial benachbarte - zweite Segment weiter.

Um die Montage zu erleichtern, kann das Verbindungselement an einem Segment zerstörungsfrei lösbar angebracht sein. So ist beispielsweise denkbar, dass das Verbindungselement mit einem Klemmsitz oder Schiebesitz innen an einem Segment angebracht ist. Bei der Montage der Schnecke muss dann nur das Segment mit dem bereits angebrachten Verbindungselement auf den Dorn aufgefädelt werden. Werden mehrere solcher Segmente, die jeweils an derselben Seite ein Verbindungselement bereits angebracht haben, in Reihe aufgefädelt, setzt sich die Schnecke automatisch zusammen.

Alternativ kann das Verbindungselement separat von den zwei Segmenten sein, die es verbindet.

In einer besonders einfachen Ausführungsform kann ein Verbindungselement eine Kugel sein.

Das Verbindungselement selbst ist dabei weder mit dem ersten noch mit dem zweiten Segment einteilig ausgeführt, sondern ein separates Element der zusammengesetzten Schnecke.

Am Übergang von einem ersten Segment zu einem zweiten Segment kann das Verbindungselement aus mehreren Einzelteilen bestehen, oder es kann aus nur einem Teil bestehen.

Die hier erfindungsrelevante Schnecke sollte jedoch eine Mehrzahl von jeweils benachbarten Segmenten mit einem Verbindungselement aufweisen. Mit anderen Worten sollen mehrere Segmentgrenzen zwischen jeweils zwei - insbesondere axial benachbarten - Segmenten mit einem Verbindungselement überbrückt werden. Dabei kann ein Verbindungselement auch bei einer Mehrzahl von zu überbrückenden Segmentgrenzen das Moment von Segment zu Segment übertragen. Eine bevorzugte Ausführungsform jedoch sieht vor, dass ein Verbindungselement jeweils nur das Drehmoment eines Segmentgrenzenübergangs überträgt.

Vorteilhaft erreicht der vorgestellte Aspekt der Erfindung eine Drehmomentübertragung beim Einsatz von Schneckensegmenten im Bereich der Extruder, also der Einschneckenextruder und Mehrschneckenextruder, wobei die im Stand der Technik bekannten teils sehr hohen Beanspruchungen des Dorns, bestehend aus Torsion, Zug, Druck und Biegung, gemindert werden. Die Gefahr des mechanischen Versagens des Dorns wird daher ganz erheblich reduziert. Zudem können für den Dorn kostengünstigere im Idealfall glattzylindrische Stangen eingesetzt werden, was überdies die Beschaffbarkeit und die Widerstandsfähigkeit gegenüber mechanischen Belastungen der Wellen erhöht.

Bei der erarbeiteten Lösung werden die Beanspruchungen getrennt. Dabei übernimmt das Schneckensegment selbst die Aufgabe, das Drehmoment zu übertragen. Dazu wird ein neues Verbindungselement eingesetzt, das mit mindestens zwei Schneckensegmenten verbunden ist und die Aufgabe übernimmt, das anfallende Drehmoment des einen Schneckensegmentes auf das nachfolgende zu übertragen. Das zwischen den Segmenten übertragene Drehmoment wird also nicht mehr mittels Schneckendorn übertragen. Der Schneckendorn bleibt somit drehmomentverschont. In der Festigkeitslehre spricht man hier von einer Spannungstrennung von Torsion- und Normalspannung. Der neuartige Schneckendorn (Zuganker) wird im Durchmesser kleiner und ist außen "glatt". Der Kerbfaktor geht somit in Richtung "1". Dies erhöht nochmals die zulässige Spannung im Bereich der Segmente.

Eine konkrete Ausführungsform besteht darin ein zylindrisches Verbindungselement einzusetzen, wobei das zylindrische Verbindungselement mindestens elfmal so lang ist wie sein Durchmesser. Dieses vergleichsweise hohe Längen zu Durchmesser Verhältnis wird gewählt um die Lochlaibungseffekte abzuschwächen.

Ein Vorteil der Erfindung liegt in der Einfachheit der Lösung, wie das Drehmoment mittels eines zusätzlichen Verbindungselementes übertragen wird und wie die Übertragung der auftretenden Belastungen auf verschiedene Bauteile aufgeteilt wird. Diese Lösung ist sehr kostengünstig, weil die Verbindungselemente als Stangenmaterial (Massenware) im Handel erhältlich sind.

Die Länge der Verbindungselemente kann ferner dazu dienen, dass die Flächenpressung aus Lochleibung ausreichend klein werden kann.

Optional weist das Segment eine Sacklochbohrung auf, wobei das Verbindungselement formschlüssig in das Sackloch eingesetzt ist.

Vorteilhaft kann dadurch erreicht werden, dass das Sackloch dazu genutzt werden kann die Einstecktiefe der Verbindungselemente festzulegen. Somit kann erreicht werden, dass ein Verbindungselement im montierten Zustand etwa gleich tief in den benachbarten Segmenten sitzt. Folglich kann das Sackloch dazu beitragen die Effekte der Lochlaibung an den beiden benachbarten Segmenten gleich hoch sind.

Bevorzugt liegt das Verhältnis vom Durchmesser des Schneckengrundes zum Durchmesser des Verbindungselementes in einem Bereich zwischen 4 und 9, bevorzugt in einem Bereich zwischen 5 und 8 und besonders bevorzugt in einem Bereich zwischen 6 und 7.

### Begrifflich sei hierzu Folgendes erläutert:

Ein "Schneckengrund" bezeichnet die radial betrachtet innere Kontaktfläche zwischen dem zu verarbeitenden Material und der Schnecke. Dabei kann es sich konkret um einen Boden eines Schneckensegmentes oder um den Außendurchmesser des Schneckendorns handeln.

Vorteilhaft kann dadurch erreicht werden, dass bei der Übertragung des Drehmomentes ein optimaler konstruktiver Kompromiss zwischen der Scherungsbelastung auf das Verbindungselement und der Lochlaibungslast auf das Segment erreicht wird.

Ausdrücklich sei darauf hingewiesen, dass die vorstehenden Bereichsgrenzen des Verhältnis vom Durchmesser des Schneckengrundes zum Durchmesser des Verbindungselementes nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Bereichsgrenzen einen Anhalt für die Ausführungsform der Verbindung zwischen benachbarte Segmenten liefern.

Nach einem zweiten Aspekt der Erfindung löst die Aufgabe eine Schnecke zum Einsatz in einem Extruder, wobei die Schnecke einen Dorn und eine Mehrzahl auf dem Dorn getragene, axial zueinander angeordnete Segmente aufweist, wobei eine Segmentgrenze zwischen einem ersten Segment und einem axial benachbarten zweiten Segment ein separates eckiges Verbindungselement aufweist, welches dazu eingerichtet ist ein Drehmoment über die Segmentgrenze zu übertragen, wobei im eingebauten Zustand eine radiale Erstreckung des Verbindungselementes größer oder gleich einer Erstreckung in Umfangsrichtung ist.

### Begrifflich sei hierzu Folgendes erläutert:

Unter einer "radialen Erstreckung des Verbindungselementes" wird ausgehend von der Achse des Extruders die räumliche Erstreckung des Verbindungselementes in radialer Richtung verstanden.

Unter einer "Erstreckung des Verbindungselementes in Umfangsrichtung" wird ausgehend von der Achse des Extruders die räumliche Erstreckung des Verbindungselementes in Umfangsrichtung verstanden.

Vorteilhaft erreicht der vorgestellte Aspekt der Erfindung eine Drehmomentübertragung beim Einsatz von Schneckensegmenten im Bereich der Extruder, also der Einschneckenextruder und Mehrschneckenextruder, wobei die im Stand der Technik bekannten teils sehr hohen Beanspruchungen des Doms, bestehend aus Torsion, Zug, Druck und Biegung, gemindert werden. Die Gefahr des mechanischen Versagens des Dorns wird daher ganz erheblich reduziert. Zudem können für den Dorn kostengünstigere im Idealfall glattzylindrische Stangen eingesetzt werden, was überdies die Beschaffbarkeit und die Widerstandsfähigkeit gegenüber mechanischen Belastungen der Wellen erhöht.

Bei der erarbeiteten Lösung werden die Beanspruchungen getrennt. Dabei übernimmt das Schneckensegment selbst die Aufgabe, das Drehmoment zu übertragen. Dazu wird ein neues Verbindungselement eingesetzt, das mit mindestens zwei Schneckensegmenten verbunden ist und die Aufgabe übernimmt, dass anfallende Drehmoment des einen Schneckensegmentes auf das nachfolgende zu übertragen. Das zwischen den Segmenten übertragene Drehmoment wird also nicht mehr mittels Schneckendorn übertragen. Der Schneckendorn bleibt somit drehmomentverschont. In der Festigkeitslehre spricht man hier von einer Spannungstrennung von Torsion- und Normalspannung. Der neuartige Schneckendorn (Zuganker) wird im Durchmesser kleiner und ist außen "glatt". Der Kerbfaktor geht somit in Richtung "1". Dies erhöht nochmals die zulässige Spannung im Bereich der Segmente.

Eine mögliche Ausgestaltung ist dabei die Verwendung von mehreren Flachstäben, die auf dem Umfang des Zugankers verteilt sind.

Für eine große radiale Erstreckung spricht dabei, dass die Anzahl gering gehalten werden kann und die Funktionalität "Übertragung der Torsion" gewährleistet ist.

Ein Vorteil der Erfindung liegt in der Einfachheit der Lösung, wie das Drehmoment mittels eines zusätzlichen Verbindungselementes übertragen wird und wie die Übertragung der auftretenden Belastungen auf verschiedene Bauteile aufgeteilt wird. Diese Lösung ist sehr kostengünstig, weil die Verbindungselemente als Stangenmaterial (Massenware) im Handel erhältlich sind.

Es sei ausdrücklich darauf hingewiesen, dass der Gegenstand des zweiten Aspektes mit dem Gegenstand des ersten Aspektes der Erfindung vorteilhaft kombinierbar ist, und zwar einzeln oder in beliebiger Kombination kumulativ.

Nach einem dritten Aspekt der Erfindung löst die Aufgabe eine Schnecke zum Einsatz in einem Extruder, wobei die Schnecke einen Dorn und eine Mehrzahl auf dem Dorn getragene, axial zueinander angeordnete Segmente aufweist, wobei eine Segmentgrenze zwischen einem ersten Segment und einem axial benachbarten zweiten Segment ein erstes separates Verbindungselement und ein zweites separates Verbindungselement mit einer abweichenden Geometrie aufweist, wobei ein Verbindungselement dazu eingerichtet ist, ein Drehmoment über die Segmentgrenze zu übertragen.

### Begrifflich sei hierzu Folgendes erläutert:

Ein "Schneckengrund" bezeichnet die radial betrachtet innere Kontaktfläche zwischen dem zu verarbeitenden Material und der Schnecke. Dabei kann es sich konkret um einen Boden eines Schneckensegmentes oder um den Außendurchmesser des Schneckendorns handeln.

Abweichend zum zweiten Aspekt der Erfindung wird hier mit einfachen Worten vorgeschlagen, an der Segmentgrenze zwischen zwei Segmenten zwei Verbindungselemente mit unterschiedlicher Geometrie einzusetzen.

So ist konkret unter anderem denkbar, dass an ein und derselben Segmentgrenze ein rundes und ein eckiges Verbindungselement gleichzeitig eingesetzt werden.

Vorteilhaft kann hierdurch erreicht werden, dass unterschiedliche Verbindungselemente derart miteinander kombiniert werden, dass abhängig von der Position des Verbindungselementes zur Position des Steges auf der Schnecke unterschiedliche Randbedingungen erfüllt werden können. Konkret ist in einer besonders vorteilhaften Gestaltungsform denkbar, dass auf Höhe der Stege in der Segmentgrenze auch außerhalb des Schneckengrundes noch Verbindungselemente mit einer geringen axialen Erstreckung, insbesondere Kugeln, eingesetzt werden, während auf einem Teilkreis mit einem geringeren Radius eckige Verbindungselemente mit einer höheren axialen Erstreckung eingesetzt werden.

Es sei ausdrücklich darauf hingewiesen, dass der Gegenstand des dritten Aspektes mit dem Gegenstand des ersten Aspektes der Erfindung vorteilhaft kombinierbar ist, und zwar einzeln oder in beliebiger Kombination kumulativ.

Bevorzugt verläuft das Verbindungselement in axialer Richtung der Schnecke durchgehend durch ein Segment, und das Verbindungselement ist dazu eingerichtet, das Drehmoment auch auf ein drittes und/oder ein noch weiter entferntes Segment zu übertragen.

Vorteilhaft kann hierdurch erreicht werden, dass die Montage der Verbindungselemente vereinfacht wird.

Nach einem vierten Aspekt der Erfindung löst die Aufgabe eine Schnecke zum Einsatz in einem Extruder, wobei die Schnecke einen Dorn und eine Mehrzahl auf dem Dorn getragene, axial zueinander angeordnete Segmente aufweist, wobei eine Segmentgrenze zwischen einem ersten Segment und einem axial benachbarten zweiten Segment ein separates rundes Verbindungselement oder ein Verbindungselement mit runden Kanten aufweist, wobei das Verbindungselement in axialer Richtung der Schnecke durchgehend durch ein Segment verläuft und dazu eingerichtet ist, ein Drehmoment über die Segmentgrenze zu einem benachbarten und/oder einem sich daran anschließenden und/oder einem noch weiter entfernten Segment zu übertragen.

### Begrifflich sei hierzu Folgendes erläutert:

Unter einem Verbindungselement mit "runden Kanten" wird verstanden, dass das Verbindungselement abgerundete Kanten aufweist. Ein solches Verbindungselement wird beispielsweise erreicht, wenn man an einem eckigen Verbindungselement die Kanten abrundet.

Abweichend vom Stand der Technik wird hier also vorgeschlagen, Verbindungselemente mit einem kreisrunden Querschnitt mit Bezug zur Achse des Extruders, insbesondere Rundstäbe, oder Verbindungselemente mit runden Kanten einzusetzen.

Ein Beispiel für ein Verbindungselement mit abgerundeten Kanten kann in einer vorteilhaften Ausführungsform ein Innensechsrund sein.

Vorteilhaft kann hierdurch erreicht werden, dass im Umfeld des Verbindungselementes geringere Kerbwirkungen auftreten und damit eine bessere Materialausnutzung erreicht werden kann.

Es sei ausdrücklich darauf hingewiesen, dass der Gegenstand des vierten Aspektes mit dem Gegenstand der vorstehenden Aspekte der Erfindung vorteilhaft kombinierbar ist, und zwar einzeln oder in beliebiger Kombination kumulativ.

Optional ist das Verbindungselement so dimensioniert ist, dass ein kritisches Drehmoment für die Verbindung der Segmente durch das Verbindungselement geringer ist als ein kritisches Drehmoment für ein Segment.

### Begrifflich sei hierzu Folgendes erläutert:

Ein "kritisches Drehmoment" wird als ein Drehmoment verstanden, bei dem es in einem der Bauteile zu einer bleibenden Beschädigung kommt,

Vorteilhaft kann so erreicht werden, dass es beim Auftreten eines kritischen Drehmomentes nicht zu einem Schaden der Schneckensegmente kommt, sondern die Verbindungselemente beschädigt werden. Auf diese Weise kann eine Reparatur günstiger ausfallen.

Bevorzugt ist das Verbindungselement ein Hohlkörper.

So kann das Verbindungselement beispielsweise eine Hülse sein.

Vorteilhaft kann hierdurch erreicht werden, dass Verbindungselemente zusätzlich in axialer Richtung gesichert werden können, insbesondere mit einer Schraube, die sich durch den Hohlraum des Verbindungselementes erstreckt.

Bevorzugt weist das Verbindungselement einen anderen Werkstoff auf als die Segmente, insbesondere Federstahl.

So ist es beispielsweise denkbar, die Verbindungselemente auf eine andere Belastung auszulegen als die Segmente. Die Verbindungselemente werden in einem theoretischen Fall fast nur durch Scherung beansprucht, so dass oft mechanisch bessere Werkstoffe eingesetzt werden können als für die vielfältig beanspruchten Flanken der Gänge an den Segmenten.

Bevorzugt weist das Verbindungselement einen anderen Werkstoff auf als der Dorn.

Auch diesbezüglich kann bei der Konstruktion der Schnecke den konkret zu erwartenden Belastungen besser Rechnung getragen werden. Der Dorn hätte bei idealer Konstruktion im Wesentlichen die axiale Zugkraft sowie überlagerte Biegewechselbeanspruchungen zu tragen. Die axiale Kraft stellt sich beim Verspannen der Segmente zum Abdichten der Segmentgrenzen ein. Darüber hinaus wird der Dorn im Normalfall noch das Biegemoment aus dem Eigengewicht der Segmente und aus einem eigenen Eigengewicht zu tragen haben, sobald die Extrudererstreckungsrichtung von der Vertikalen abweicht. Die Eigengewichtseffekte sind gegenüber der Verspannkraft im Normalfall jedoch als gering zu erwarten.

Bevorzugt ist das Verbindungselement radial außerhalb des Dorns angeordnet.

Vorteilhaft kann hierdurch erreicht werden, dass der Dorn geometrisch sehr einfach gestaltet werden kann.

Bevorzugt ist das Verbindungselement radial innerhalb der Segmente angeordnet.

Vorteilhaft kann hierdurch erreicht werden, dass der Dorn geometrisch sehr einfach gestaltet werden kann und eine hohe Materialausnutzung des Dorns erreicht werden kann.

Bevorzugt weist das Verbindungselement einen axialen Spielraum zwischen den Segmenten auf.

Vorteilhaft kann hierdurch erreicht werden, dass keine Doppelpassung beim axialen Verspannen der Segmente vorliegen. Weiterhin wird hierdurch das Risiko undichter Segmentgrenzen reduziert.

Bevorzugt erstreckt sich das Verbindungselement spielfrei durch die Segmente, insbesondere in Umfangsrichtung der Segmente.

Vorteilhaft kann hierdurch erreicht werden, dass an den Segmentgrenzen keine hohen Kerbbelastungen zwischen dem Verbindungselement und den an die Segmentgrenze angrenzenden Segmenten entsteht.

Bevorzugt weist das Verbindungselement in axialer Richtung der Schnecke einen Linienkontakt zum Dorn auf.

Vorteilhaft kann hierdurch erreicht werden, dass die Gestaltung der Segmente sowie die Fertigung der Segmente vereinfacht wird. In dieser vorteilhaften Ausführung können die Segmente eine Nut aufweisen, in die das Verbindungselement eingesteckt wird. Diese sehr einfache Lösung ist insbesondere sehr kostengünstig.

Bevorzugt weist das Verbindungselement zum Dorn hin eine kreisrunde Aussparung auf.

Vorteilhaft kann hierdurch erreicht werden, dass sich das Verbindungselement noch besser in die in den Segmenten dafür vorgesehene Nut einpasst.

Bevorzugt weist der Dorn einen Kerbfaktor auf, der im Bereich zwischen 1 und 1,2, bevorzugt im Bereich zwischen 1 und 1,05 und besonders bevorzugt im Bereich zwischen 1 und 1,01, liegt.

Im Idealfall weist der Dorn innerhalb der Segmente einen kreisrunden Querschnitt auf. Der Kerbfaktor β beträgt im Idealfall 1. Je kreisrunder und glatter der Dorn in seinem Querschnitt ist, umso besser ist die mögliche Ausnutzung des Materials.

Ausdrücklich sei darauf hingewiesen, dass die vorstehenden Bereichsgrenzen des Kerbfaktors für den Dorn nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Bereichsgrenzen einen Anhalt für die Ausführungsform des hier vorgeschlagenen Dorns liefern.

Bevorzugt weist der Dorn innerhalb der Segmente einen kreisrunden Querschnitt auf.

Vorteilhaft kann hierdurch erreicht werden, dass der Dorn sehr kostengünstig hergestellt werden kann und kostengünstig zu beziehen ist. Weiterhin führt diese Ausgestaltung des Dorns zu einer sehr guten möglichen Materialausnutzung des Dorns.

Bevorzugt ist der Dorn im Querschnitt kreisrund, insbesondere über seine gesamte Längserstreckung axial innerhalb der Segmente.

Vorteilhaft kann hierdurch erreicht werden, dass der Dorn sehr kostengünstig hergestellt werden kann und kostengünstig zu beziehen ist. Weiterhin führt diese insbesondere vorteilhafte Ausgestaltung des Dorns zu einer sehr guten möglichen Materialausnutzung des Dorns.

Bevorzugt weisen die Segmente zum Dorn hin eine kreisrunde Aussparung auf.

Vorteilhaft kann hierdurch erreicht werden, dass die Segmente einen Formschluss zu einem kreisrunden Dorn ermöglichen. Diese Ausführungsform ist besonders kostengünstig und kann eine hohe mögliche Materialausnutzung ergeben.

Bevorzugt weisen die Segmente einen Schiebesitz gegenüber dem Dorn auf.

Ein "Schiebesitz" ist eine Passung, welche einen festen Sitz beschreibt, bei dem sich die Teile aber nicht verkeilen. Eine Erläuterung zum Schiebesitz findet sich beispielsweise in Lueger, Otto: Lexikon der gesamten Technik und ihrer Hilfswissenschaften, Band 7 Stuttgart, Leipzig 1909, Seite 47.

Vorteilhaft kann hierdurch erreicht werden, dass sich die Segmente sehr gut auf den Dorn montieren lassen.

Bevorzugt sind die Segmente, mindestens ein Segment, insbesondere alle bis auf eines, frei drehbar um den Dorn gestaltet.

Vorteilhaft kann hierdurch erreicht werden, dass eine klare Funktionstrennung zwischen den Segmenten und dem Dorn erreicht wird und konstruktiv keine Doppelpassungen entstehen.

Bevorzugt sind die Segmente, der Dorn und das Verbindungselement zum Übertragen von mindestens 70 %, insbesondere 80 % oder 90 % oder 100 %, eines Drehmomentes von Segment zu Segment mittels des Verbindungselementes eingerichtet.

Die Erfindung sei jedenfalls dann als verwirklicht angesehen, wenn die Segmente, der Dorn und die Verbindungselemente zueinander so abgestimmt sind, dass sich mindestens 70 % eines Drehmoments, insbesondere mindestens 80 % oder 90 % oder besonders vorteilhaft sogar 100 %, von Segment/-en zu Segment/-en überträgt, und zwar mittels Verbindungselement/-en.

Ausdrücklich sei darauf hingewiesen, dass die vorstehenden Werte für die Übertragung des Drehmomentes nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe der hier vorgeschlagenen Verbindungselemente liefern.

Nach einem fünften Aspekt der Erfindung löst die Aufgabe eine Schnecke zum Einsatz in einem Extruder, wobei die Schnecke einen Dorn und eine Mehrzahl auf dem Dorn getragene, axial zueinander angeordnete Segmente aufweist, wobei eine Segmentgrenze zwischen einem ersten Segment und einem axial benachbarten zweiten Segment einen separates zylindrisches Verbindungselement aufweist, welches dazu eingerichtet ist ein Drehmoment über die Segmentgrenze zu übertragen, wobei eine Länge eines ersten Segmentes von der Länge eines zweiten Segmentes abweicht.

So kann die Länge eines beliebigen Segmentes auf der Schnecke von den anderen Segmenten abweichen.

Denkbar ist auch, dass alle Segmente eine jeweils unterschiedliche Länge aufweisen.

Vorteilhaft kann hierdurch erreicht werden, dass die Flexibilität bei der Konfiguration der Schnecke erhöht werden kann. Eine Schnecke kann so unterschiedliche Zonen unterschiedlicher Längen aufweisen.

Optional ist ein Segment an einem Ende der Schnecke länger als ein anderes Segment, insbesondere doppelt so lang oder dreimal so lang.

Vorteilhaft kann dabei erreicht werden, dass ein erstes Segment der Schnecke, welches mit dem Antrieb verbunden ist oder den Schneckendorn aufweist anders ausgeführt und an die spezifischen Anforderungen eines Segmentes am Schneckenende angepasst werden kann, ohne dabei die Vorteile der vorliegenden Erfindung zu verlieren.

Es sei ausdrücklich darauf hingewiesen, dass der Gegenstand des fünften Aspektes mit dem Gegenstand der vorstehenden Aspekte der Erfindung vorteilhaft kombinierbar ist, und zwar einzeln oder in beliebiger Kombination kumulativ.

Nach einem sechsten Aspekt der Erfindung löst die Aufgabe ein Extruder, in welchem eine hier vorgeschlagene Schnecke zum Einsatz kommt.

Es versteht sich, dass sich die Vorteile einer Schnecke wie vorstehend beschrieben unmittelbar auf einen Extruder erstrecken, insbesondere auf einen Einschneckenextruder oder einen Mehrschneckenextruder, der eine Schnecke wie vorstehend beschrieben aufweist.

Es sei ausdrücklich darauf hingewiesen, dass der Gegenstand des sechsten Aspektes mit dem Gegenstand der vorstehenden Aspekte der Erfindung vorteilhaft kombinierbar ist, und zwar einzeln oder in beliebiger Kombination kumulativ.

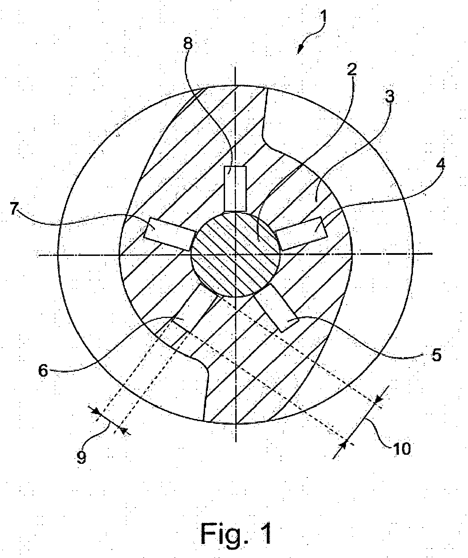

Nachstehend wird die Erfindung anhand zweier Ausführungsbeispiele unter Bezugnahme auf die Zeichnung näher erläutert. Dort zeigen
- Fig. 1: schematisch in einem Schnitt eine Extruderschnecke, wobei die Exruderschnecke einen Dorn und eine Mehrzahl auf dem Dorn getragene, axial zueinander angeordnete Segmente aufweist, wobei eine Segmentgrenze zwischen einem ersten Segment und einem axial benachbarten zweiten Segment ein separates eckiges Verbindungselement aufweist, welches dazu eingerichtet ist, ein Drehmoment über die Segmentgrenze zu übertragen, wobei im eingebauten Zustand eine radiale Erstreckung des Verbindungselementes größer oder gleich einer Erstreckung in Umfangsrichtung ist,

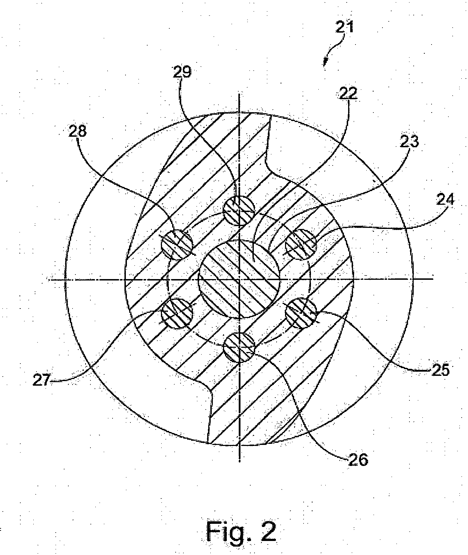

- Fig. 2: schematisch in einem Schnitt eine alternative Extruderschnecke, wobei die Extruderschnecke einen Dorn und eine Mehrzahl auf dem Dorn getragene, axial zueinander angeordnete Segmente aufweist, wobei eine Segmentgrenze zwischen einem ersten Segment und einem axial benachbarten zweiten Segment ein separates rundes Verbindungselement aufweist, wobei das Verbindungselement in axialer Richtung der Schnecke durchgehend durch ein Segment verläuft und dazu eingerichtet ist, ein Drehmoment über die Segmentgrenze zu einem benachbarten und/oder einem sich daran anschließenden und/oder einem noch weiter entfernten Segment zu übertragen,

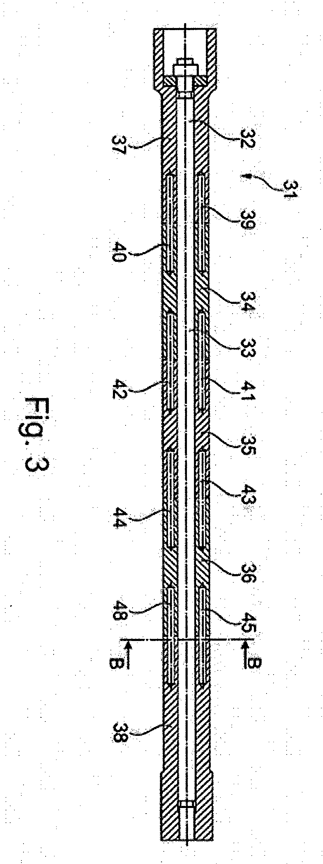

- Fig. 3: schematisch in einem Schnitt eine alternative Extruderschnecke, welche aus mehreren Segmenten aufgebaut ist, insbesondere mit einem ersten und einem letzten Segment, welche mit Verbindungselementen verbunden sind, und

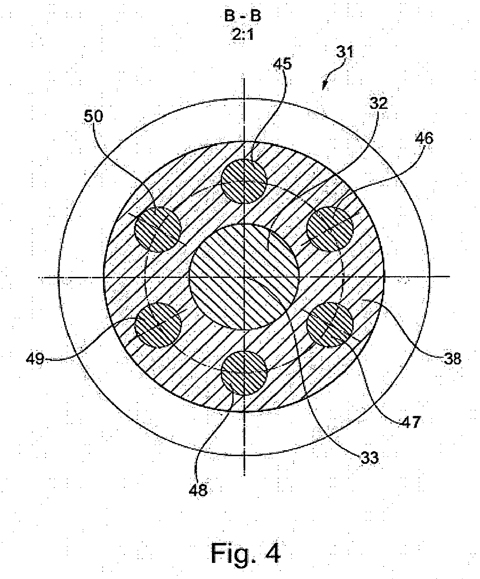

- Fig. 4: schematisch einen Schnitt durch die alternative Extruderschnecke aus Fig. 3.

Die Extruderschnecke 1 in Figur 1 weist einen Dorn 2 und eine Mehrzahl auf dem Dorn getragene, axial zueinander angeordnete Schneckensegmente 3 auf (das Schneckensegment 3 ist in einem normal zur Achse des Extruders verlaufenden Schnitt in unmittelbarer Nähe zur Segmentgrenze dargestellt).

An der Grenze zwischen einem ersten Schneckensegment 3 und einem axial benachbarten zweiten Segment (in Figur 1 verdeckt) weist die Extruderschnecke mehrere separate eckige Verbindungselemente 4, 5, 6, 7, 8 auf.

Die Verbindungselemente 4, 5, 6, 7, 8 sind dazu eingerichtet, ein Drehmoment über die Segmentgrenze zu übertragen.

Dabei ist im eingebauten Zustand eine radiale Erstreckung 10 der Verbindungselemente 4, 5, 6, 7, 8 größer oder gleich einer Erstreckung 9 in Umfangsrichtung.

Aussparungen (nicht im Einzelnen beziffert) im Schneckensegment 3 verfügen über eine Kontur, die zumindest im Wesentlichen identisch mit der Kontur der Verbindungselemente 4, 5, 6, 7, 8 ist. Die Aussparungen sind in Richtung zur Segmentachse (nicht beziffert), im aufgefädelten Zustand daher zum Dorn 2 hin, geöffnet, sodass die Verbindungselemente 4, 5, 6, 7, 8 sämtlich axial und/oder radial aus den Aussparungen entnehmbar und in diese einfügbar sind.

Die alternative Extruderschnecke 21 in Figur 2 weist einen Dorn 22 und eine Mehrzahl auf dem Dorn getragene, axial zueinander angeordnete Segmente 23 auf (ein Segment ist in einem normal zur Achse des Extruders verlaufenden Schnitt in unmittelbarer Nähe zur Segmentgrenze dargestellt).

An der Grenze zwischen dem Segment 23 und einem axial benachbarten zweiten Segment (nicht dargestellt) weist die alternative Extruderschnecke 21 mehrere separate kreisrunde Verbindungselemente 24, 25, 26, 27, 28, 29 auf.

Die Verbindungselemente 24, 25, 26, 27, 28, 29 verlaufen in axialer Richtung der Schnecke durchgehend durch ein Segment hindurch.

Die Verbindungselemente 24, 25, 26, 27, 28, 29 sind dazu eingerichtet, ein Drehmoment über die Segmentgrenze zu einem benachbarten und/oder einem sich daran anschließenden und/oder einem noch weiter entfernten Segment zu übertragen.

Die alternative Extruderschnecke 31 in Figur 3 und 4 weist einen Dorn 32 mit einer Achse 33 auf. Die Schneckengänge der Extruderschnecke sind dabei vereinfachend nicht dargestellt. Dargestellt ist der Schneckengrund der alternativen Extruderschnecke.

Die alternative Extruderschnecke 31 weist mehrere auf dem Dorn 32 getragene, axial zueinander angeordnete Segmente 34, 35, 36, 37, 38 auf.

Ein erstes Schneckensegment 37 und ein letztes Schneckensegment 38 sind dabei jeweils anders ausgeführt als die verbleibenden Schneckensegmente 34, 35, 36.

An der Grenze zwischen den Schneckensegmenten 34, 35, 36, 37, 38 weist die Extruderschnecke eine Vielzahl Verbindungselemente 39, 40, 41, 42, 43, 44, 45, 46, 47, 48, 49, 50 auf.

Die Verbindung benachbarter Segmente ist dabei immer nach dem gleichen Schema aufgebaut. Beispielhaft wird hier die Verbindung des Letzten Segmentes 38 mit dem benachbarten Segment 36 genauer betrachtet, welche in Figur 4 in einem Schnitt durch das letzte Segment 38 dargestellt ist.

Zu erkennen sind die Verbindungselemente 45, 46, 47, 48, 49, 50, welche auf einem Teilkreis innerhalb der Segmente 36, 38 angeordnet sind.

Die Verbindungselemente 39, 40, 41, 42, 43, 44, 45, 46, 47, 48, 49, 50 sind in Sacklochbohrungen (hier aus Gründen der Übersichtlichkeit nicht beziffert) formschlüssig eingesetzt.

### Liste der verwendeten Bezugszeichen

- 1: Extruderschnecke
- 2: Dorn
- 3: Schneckensegment
- 4: Verbindungselement
- 5: Verbindungselement
- 6: Verbindungselement
- 7: Verbindungselement
- 8: Verbindungselement
- 9: Erstreckung in Umfangrichtung
- 10: Radiale Erstreckung
- 21: Alternative Extruderschnecke
- 22: Dorn
- 23: Schneckensegment
- 24: Verbindungselement
- 25: Verbindungselement
- 26: Verbindungselement
- 27: Verbindungselement
- 28: Verbindungselement
- 29: Verbindungselement
- 31: Alternative Extruderschnecke
- 32: Dorn
- 33: Achse
- 34: Schneckensegment
- 35: Schneckensegment
- 36: Schneckensegment
- 37: Erstes Schneckensegment
- 38: Letztes Schneckensegment
- 39: Verbindungselement
- 40: Verbindungselement
- 41: Verbindungselement
- 42: Verbindungselement
- 43: Verbindungselement
- 44: Verbindungselement
- 45: Verbindungselement
- 46: Verbindungselement
- 47: Verbindungselement
- 48: Verbindungselement
- 49: Verbindungselement
- 50: Verbindungselement

## Patentansprüche

1. Schnecke zum Einsatz in einem Extruder, wobei die Schnecke einen Dorn und eine Mehrzahl auf dem Dorn getragene, axial zueinander angeordnete Segmente aufweist, wobei eine Segmentgrenze zwischen einem ersten Segment und einem axial benachbarten zweiten Segment ein separates zylindrisches Verbindungselement aufweist, welches dazu eingerichtet ist, ein Drehmoment über die Segmentgrenze zu übertragen,
***dadurch gekennzeichnet, dass***
das Verhältnis einer Länge des Verbindungselementes zum Durchmesser des Verbindungselementes größer ist als 11.

2. Schnecke nach Anspruch 1, ***dadurch gekennzeichnet, dass*** das Segment ein Sackloch aufweist, wobei das Verbindungselement formschlüssig in das Sackloch eingesetzt ist.

3. Schnecke nach einem der Ansprüche 1 öder 2, ***dadurch gekennzeichnet*, *dass*** das Verhältnis vom Durchmesser des Schneckengrundes zum Durchmesser des Verbindungselementes in einem Bereich zwischen 4 und 9, bevorzugt in einem Bereich zwischen 5 und 8 und besonders bevorzugt in einem Bereich zwischen 6 und 7 liegt.

4. Schnecke zum Einsatz in einem Extruder, wobei die Schnecke einen Dorn und eine Mehrzahl auf dem Dorn getragene, axial zueinander angeordnete Segmente aufweist, wobei eine Segmentgrenze zwischen einem ersten Segment und einem axial benachbarten zweiten Segment ein separates eckiges Verbindungselement aufweist, welches dazu eingerichtet ist ein Drehmoment über die Segmentgrenze zu übertragen,
***insbesondere*** Schnecke nach einem der vorstehenden Ansprüche,
***dadurch gekennzeichnet, dass***
im eingebauten Zustand eine radiale Erstreckung des Verbindungselementes größer oder gleich einer Erstreckung in Umfangsrichtung ist.

5. Schnecke zum Einsatz in einem Extruder, wobei die Schnecke einen Dorn und eine Mehrzahl auf dem Dorn getragene, axial zueinander angeordnete Segmente aufweist,
***insbesondere*** Schnecke nach einem der vorstehenden Ansprüche,
***dadurch gekennzeichnet, dass***
eine Segmentgrenze zwischen einem ersten Segment und einem axial benachbarten zweiten Segment ein erstes separates Verbindungselement und ein zweites separates Verbindungselement mit einer abweichenden Geometrie aufweist,
wobei ein Verbindungselement dazu eingerichtet ist ein Drehmoment über die Segmentgrenze zu übertragen.

6. Schnecke nach einem der vorstehenden Ansprüche, ***dadurch gekennzeichnet*, *dass*** das Verbindungselement in axialer Richtung der Schnecke durchgehend durch ein Segment verläuft und das Verbindungselement dazu eingerichtet ist das Drehmoment auch auf ein drittes und/oder ein noch weiter entferntes Segment zu übertragen.

7. Schnecke zum Einsatz in einem Extruder, wobei die Schnecke einen Dorn und eine Mehrzahl auf dem Dorn getragene, axial zueinander angeordnete Segmente aufweist, wobei eine Segmentgrenze zwischen einem ersten Segment und einem axial benachbarten zweiten Segment ein separates rundes Verbindungselement oder ein Verbindungselement mit runden Kanten aufweist,
***insbesondere*** Schnecke nach einem der vorstehenden Ansprüche,
***dadurch gekennzeichnet*, *dass***
das Verbindungselement in axialer Richtung der Schnecke durchgehend durch ein Segment verläuft
und dazu eingerichtet ist ein Drehmoment über die Segmentgrenze zu einem benachbarten und/oder einem sich daran anschließenden und/oder einem noch weiter entfernten Segment zu übertragen.

8. Schnecke insbesondere nach einem der vorstehenden Ansprüche, ***dadurch gekennzeichnet, dass*** das Verbindungselement so dimensioniert ist, dass ein kritisches Drehmoment für die Verbindung der Segmente durch das Verbindungselement geringer ist als ein kritisches Drehmoment für ein Segment.

9. Schnecke nach einem der vorstehenden Ansprüche, ***dadurch gekennzeichnet, dass*** das Verbindungselement ein Hohlkörper ist.

10. Schnecke nach einem der vorstehenden Ansprüche, ***dadurch gekennzeichnet, dass*** das Verbindungselement einen anderen Werkstoff aufweist als die Segmente, insbesondere Federstahl.

11. Schnecke nach einem der vorstehenden Ansprüche, ***dadurch gekennzeichnet*, *dass*** das Verbindungselement einen anderen Werkstoff aufweist als der Dorn.

12. Schnecke nach einem der vorstehenden Ansprüche, ***dadurch gekennzeichnet*, *dass*** das Verbindungselement radial außerhalb des Dorns angeordnet ist.

13. Schnecke nach einem der vorstehenden Ansprüche, ***dadurch gekennzeichnet, dass*** das Verbindungselement radial innerhalb der Segmente angeordnet ist.

14. Schnecke nach einem der vorstehenden Ansprüche, ***dadurch gekennzeichnet, dass*** das Verbindungselement einen axialen Spielraum zwischen den Segmenten aufweist.

15. Schnecke nach einem der vorstehenden Ansprüche, ***dadurch gekennzeichnet*, *dass*** das sich das Verbindungselement spielfrei durch die Segmente erstreckt, insbesondere in Umfangsrichtung der Segmente.

16. Schnecke nach einem der vorstehenden Ansprüche, ***dadurch gekennzeichnet*, *dass*** das Verbindungselement in axialer Richtung der Schnecke einen Linienkontakt zum Dorn aufweist.

17. Schnecke nach einem der vorstehenden Ansprüche, ***dadurch gekennzeichnet*, *dass*** das Verbindungselement zum Dorn hin eine kreisrunde Aussparung aufweist.

18. Schnecke nach einem der vorstehenden Ansprüche, ***dadurch gekennzeichnet*, *dass*** der Dorn einen Kerbfaktor aufweist, der im Bereich zwischen 1 und 1,2, bevorzugt im Bereich zwischen 1 und 1,05 und besonders bevorzugt im Bereich zwischen 1 und 1,01 liegt.

19. Schnecke nach einem der vorstehenden Ansprüche, ***dadurch gekennzeichnet*, *dass*** der Dorn innerhalb der Segmente einen kreisrunden Querschnitt aufweist.

20. Schnecke nach einem der vorstehenden Ansprüche, ***dadurch gekennzeichnet, dass*** der Dorn im Querschnitt kreisrund ist, insbesondere über seine gesamte Längserstreckung axial innerhalb der Segmente.

21. Schnecke nach einem der vorstehenden Ansprüche, ***dadurch gekennzeichnet, dass*** die Segmente zum Dorn hin eine kreisrunde Aussparung aufweisen.

22. Schnecke nach einem der vorstehenden Ansprüche, ***dadurch gekennzeichnet, dass*** die Segmente einen Schiebesitz gegenüber dem Dorn aufweisen.

23. Schnecke nach einem der vorstehenden Ansprüche, ***dadurch gekennzeichnet*, *dass*** die Segmente, mindestens ein Segment, insbesondere alle bis auf eines, frei drehbar um den Dorn gestaltet sind.

24. Schnecke nach einem der vorstehenden Ansprüche, ***dadurch gekennzeichnet, dass*** die Segmente, der Dorn und das Verbindungselement zum Übertragen von mindestens 70 %, insbesondere 80 % oder 90 % oder 100 %, eines Drehmomentes von Segment zu Segment mittels des Verbindungselementes eingerichtet sind.

25. Schnecke zum Einsatz in einem Extruder, wobei die Schnecke einen Dorn und eine Mehrzahl auf dem Dorn getragene, axial zueinander angeordnete Segmente aufweist, wobei eine Segmentgrenze zwischen einem ersten Segment und einem axial benachbarten zweiten Segment einen separates zylindrisches Verbindungselement aufweist, welches dazu eingerichtet ist ein Drehmoment über die Segmentgrenze zu übertragen,
***insbesondere*** Schnecke nach einem der vorstehenden Ansprüche,
***dadurch gekennzeichnet, dass***
eine Länge eines ersten Segmentes von der Länge eines zweiten Segmentes abweicht.

26. Schnecke nach Anspruch 25, ***dadurch gekennzeichnet*, *dass*** ein Segment an einem Ende der Schnecke länger ist als ein anderes Segment, insbesondere doppelt so lang oder dreimal so lang.

27. Extruder mit einer Schnecke nach einem der vorstehenden Ansprüche.

28. Anlage zum Herstellen eines Produkts, insbesondere Halbzeugs, aus thermoplastischem Kunststoff, aufweisend einen Extruder nach Anspruch 27.
